(19) Europäisches Patentamt
European Patent Office
Office européen des brevets

(11) **EP 3 490 041 A1**

# EUROPEAN PATENT APPLICATION
published in accordance with Art. 153(4) EPC

(43) Date of publication:
**29.05.2019 Bulletin 2019/22**

(21) Application number: **17831041.3**

(22) Date of filing: **19.07.2017**

(51) Int Cl.:
*H01M 4/525* (2010.01)    *C01G 53/00* (2006.01)
*H01M 4/505* (2010.01)

(86) International application number:
**PCT/JP2017/026104**

(87) International publication number:
**WO 2018/016525 (25.01.2018 Gazette 2018/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.07.2016 JP 2016144384**

(71) Applicant: **Umicore
1000 Brussels (BE)**

(72) Inventor: **Ralph Otterstedt
38642 Goslar (DE)**

(74) Representative: **Umicore RDI Patent Department
Watertorenstraat 33
2250 Olen (BE)**

(54) **LITHIUM METAL COMPOSITE OXIDE POWDER**

(57)    Problem

To provide a lithium ion battery positive electrode active material having a reduced amount of a lithium residue and an excellent volumetric capacity.

Solution

A powder is formed of particles of a lithium-nickel-cobalt-manganese composite oxide having a composition: $Li_aNi_bCo_cMn_dO_2$ ($0.8 \leq a \leq 1.2$, $0.7 \leq b \leq 0.95$, $0.05 \leq c \leq 0.33$, $0.05 \leq d \leq 0.33$, and $b+c+d=1$), in which an average particle diameter (volume-based average diameter) of the powder is more than 10.0 $\mu$m and less than 16.0 $\mu$m, a specific surface area of the powder by a BET method using nitrogen adsorption is more than 0.5 m$^2$/g and less than 2.0 m$^2$/g, and the powder has been subjected to a water washing treatment.

EP 3 490 041 A1

**Description**

Technical Field

The present invention relates to a powdered lithium metal complex oxide and a lithium ion battery using the same in a positive electrode.

Background Art

Lithium ion batteries have a long history and commercial production thereof begun in the 1990's. However, it may be said that the lithium ion batteries have been developed to a full scale by a widespread use of portable terminals, smart phones, electric vehicles, and the like since 2000's. The lithium ion batteries are constituted with a positive electrode, a negative electrode, an electrolyte, and an exterior body as main constituent members in the same manner as other batteries, but among these, a positive electrode active material used in the positive electrode is an important material that determines the battery performance of the lithium ion batteries. As the positive electrode active material used in the lithium ion batteries, a lithium cobalt oxide, a ternary composite oxide, a nickel-based composite oxide, a spinel-type composite oxide, an olivine-type compound, and the like are known. Among these, the lithium cobalt oxide, the ternary complex oxide, or the nickel-based composite oxide is known as a composite oxide having a layered crystal structure, which has a large discharge capacity. Generally, a positive electrode active material formed of a layered composite metal oxide is produced by powder-mixing a composite metal hydroxide which is a precursor with a lithium compound, and calcining the mixture in an oxidizing atmosphere. Here, in order to increase the crystallinity of the positive electrode active material thus produced, a ratio (lithium/metal) of the precursor metal to lithium included in the lithium compound is generally set to 1 to perform the preparation. Accordingly, in the positive electrode active material having a general layered structure, an excessive fraction of the lithium compound remains on the surface of the active material after calcination. In a case where the lithium compound remains in a large amount, a cross-linking reaction of a binder for use in the production of a positive electrode is caused and the positive electrode slurry is gelled. As a result, there occurs a problem in that electrode coating cannot be performed, and therefore, it is preferable that the content of the residual lithium in the active material is small.

On the other hand, the positive electrode active material having a layered structure may have a high capacity, as compared with other active materials. There is an increasing demand for a high capacity of a lithium ion battery as accompanied by diversification of the applications of the battery, and in particular, whether electric vehicles are successful or not is directly linked to a possibility of achieving the high capacity. It is one of key technology for achieving a high capacity of a lithium ion battery to achieve a higher capacity of an active material, which is to enhance the amount of the active material to be packed in an electrode, in addition to achieving a higher capacity of the active material itself, that is, to increase the packing density of the active material into the electrode.

However, in a case where it is intended to obtain a positive electrode active material powder in which a positive electrode active material powder is packed at a high density through compression at a high pressure, secondary particles constituting the positive electrode active material powder are broken with an increase in a load applied to the positive electrode active material powder, voids or fine powders are generated inside the powders, and thus, a compressive stress is reduced. Due to repetition of such breakage of the secondary particles and reduction in the compression stress, voids or fine powders included are finally incorporated by compressive packing. Accordingly, a positive electrode active material having irregular particle shapes is obtained and the packing density of the positive electrode active material powders may not reach a targeted value in many cases.

Therefore, as another approach for achieving a high packing density, a so-called bimodal mixing method in which to an active material with small particle diameters and an active material with large particle diameters are mixed in order to achieve a high packing density is employed. For example, PTL 1 discloses a positive electrode active material for a lithium secondary battery, which includes particles with large particle diameters of an approximately spherical lithium cobalt composite oxide having an average particle diameter D50 of 7 to 20 $\mu$m, a volume-based cumulative diameter D10 accounting for 50% or more of the average particle diameter D50, and a volume-based cumulative diameter D90 accounting for 150% or less of the average particle diameter D50, and particles with small particle diameters of a lithium cobalt composite oxide having an average particle diameter D50 accounting for 10% to 30% of D50 of the particles with large particle diameters of the lithium cobalt composite oxide as a lithium cobalt composite oxide represented by General Formula $Li_pCo_xM_yO_zF_a$ (in which M is a transition metal element or alkaline earth metal element other than other than Co., $0.9 \leq p \leq 1.1$, $0.980 \leq x \leq 1.000$, $0 \leq y \leq 0.02$, $1.9 \leq z \leq 2.1$, $x+y=1$, and $0 \leq a \leq 0.02$), and is formed of a mixture of the former and the latter at a mass ratio of 1/2 to 9/1. However, in order to produce such a positive electrode active material, it is necessary to prepare each of the active material with small particle diameters and the active material with large particle diameters separately, and therefore, a production efficiency is low.

Citation List

Patent Literature

[PTL 1] Japanese Patent No. 4268392

Summary of Invention

Technical Problem

Therefore, the present inventors have made an effort w ith an object to obtain a positive electrode active material having a high packing density, which does not follow a bimo dal mixing method. As a result, the present inventors have found that a positive electrode active material powder havin g an average particle diameter and a BET specific surface ar ea, each in a specific range, obtained by subjecting a lithi um-nickel-cobalt-manganese composite oxide immediately afte r calcination to a water washing treatment under specific co nditions, exhibits a high stress even under a high-load comp ression, that is, the positive electrode active material pow der can be packed at a higher density than the related art. In addition, they have found that such a positive electrode active material powder also exhibits a preferred quality in terms of a small amount of residual lithium.

Solution to Problem

The present invention relates to a positive electrode active material powder having an average particle diameter and a BET specific surface area, each in a specific range, in which the positive electrode active material powder has been subjected to a water washing treatment under specific conditions. That is, the present invention is as follows.

(Invention 1) A powdered lithium metal complex oxide for use as a lithium ion battery positive electrode active material, wherein: the powdered lithium metal complex oxide is constituted by particles of a lithium/nickel/cobalt/manganese complex oxide having the composition $Li_aNi_bCo_cMn_dO_2$ (with $0.8 \leq a \leq 1.2$, $0.7 \leq b \leq 0.95$, $0.05 \leq c \leq 0.33$, $0.05 \leq d \leq 0.33$, b+c+d =1),
the particles having an average particle size (volumetric average size) of greater than 10.0 $\mu$m and less than 16.0 $\mu$m), the particles having a BET specific surface area as determined via nitrogen adsorption of greater than 0.5 $m^2$/g and less than 2.0 $m^2$/g,
and the particles is washed with at least 100 ml of pure water per 100 g of particles to reduce whereby the residual lithium hydroxide content to 0.3% by weight or less.
(Invention 2) The powdered lithium metal complex oxide according to Invention 1, wherein the particles having a BET specific surface area as determined via nitrogen adsorption of greater than 1.0 $m^2$/g and less than 2.0 $m^2$/g.
(Invention 3) The powdered lithium metal complex oxide according to Invention 1 or 2, wherein the lithium metal complex oxide further comprises up to 10 mol% of either one or more dopants selected from the group consisting of Ca, Ti, Al, Mg, W, Zr, Cr and V.
(Invention 4) The powdered lithium metal complex oxide according to Inventions 1 to 3, having a pressed density of 3.0 $g/cm^3$ or greater under a pressure of 127 MPa.
(Invention 5) A positive electrode active material containing the powdered lithium metal complex oxide according to any one of Inventions 1 to 4.
(Invention 6) A lithium ion battery containing the positive electrode active material according to Invention 5.
(Invention 7) A method of producing a powdered lithium metal complex hydroxide according to any one of Inventions 1 to 4, which comprises the following steps; a mixing step, wherein a powder of nickel-cobalt-manganese complex hydroxide having an average particle size of from 10.0 $\mu$m to less than 20.0 $\mu$m is prepared as a precursor powder and powder of a lithium compound is added to the precursor powder, and wherein the amount ratio of the precursor powder to the lithium compound powder is within a range capable of obtaining a mixture at a ratio such that elements of Li, Ni, Co, and Mn satisfy a composition of $Li_aNi_bCo_cMn_dO_2$ (with $0.8 \leq a \leq 1.2$, $0.7 \leq b \leq 0.95$, $0.05 \leq c \leq 0.33$, $0.05 \leq d \leq 0.33$, b+c+d = 1),
a baking step wherein the mixture obtained in the mixing step is baked in a gas flow containing oxygen at the baking temperature within a range of from 450°C to 900°C in the baking time of from 2 hours to 20 hours, and a washing step wherein the baked product (lithium-nickel-cobalt-manganese complex oxide) is washed with pure water in an amount of 100 mL or greater relative to 100 g of the fired product and wherein lithium metal complex oxide powder is obtained.

The powdered lithium metal complex oxide of the present invention has been washed with pure water in an amount of 100 ml or more with respect to 100 g of the powder. It has been elucidated that the performance of the powdered lithium metal complex oxide is improved by such the water washing, that is, the amount of residual lithium unnecessary for a positive electrode agent is reduced, but it is difficult to express the chemical characteristics of the lithium metal composite oxide resulting from such the water washing by a uniform formula. In addition, the particles constituting the lithium metal composite oxide which has been subjected to such the water washing are not completely uniform and are not identified with uniform sizes and shapes. Accordingly, a type of a production process which involves "water washing with 100 ml or more of pure water with respect to 100 g of the powder" should be essentially employed as one of the characteristics of the powdered lithium metal complex oxide of the present invention.

Advantageous Effects of Invention

According to the present invention, a lithium metal-based positive electrode active material having a small amount of residual lithium and a high electrode density as formed into a positive electrode for a lithium ion battery, and a lithium ion battery using the same are provided. Description of Embodiments

[Method for Producing Powdered lithium metal complex oxide]

The method for producing the powdered lithium metal complex oxide of the present invention will be described.
(Mixing) First, a powder of a nickel-cobalt-manganese composite hydroxide having an average particle diameter of more than or equal to 10.0 $\mu$m and less than 20.0 $\mu$m is prepared as a precursor powder. A powder of a lithium compound is added to the precursor powder. It is general to use lithium hydroxide or lithium carbonate as the lithium compound. In this mixing step, an amount ratio of the precursor powder to the lithium compound powder is in a range so that a mixture including elements Li, Ni, Co, and Mn at ratios satisfying a composition: $Li_aNi_bCo_cMn_dO_2$ ($0.8 \leq a \leq 1.2$, $0.7 \leq b \leq 0.95$, $0.05 \leq c \leq 0.33$, $0.05 \leq d \leq 0.33$, and $b+c+d=1$) is obtained. A means for mixing the precursor powder with the lithium compound powder is not limited as long as it is a mixing means with a shear force applied thereon, and generally, various mixers are used.
(Calcination) Next, the mixture obtained in the mixing step is calcined at a temperature in an air stream including oxygen. The calcination temperature is in a range of 450°C to 900°C, and preferably in a range of 600°C to 850°C. The calcination time is 2 hours to 20 hours, and preferably 3 hours to 15 hours. The calcination may be performed once or a plurality of times. In a case where the calcination is performed a plurality of times, the temperature range is maintained at each round of calcination for 2 hours to 30 hours. For example, the calcination is performed at a temperature in a range of 450°C to 700°C for 3 hours to 6 hours in the first stage, and performed at a temperature in a range of 700°C to 900°C for 4 hours to 10 hours in the second stage. Equipment to be used for calcination is not limited as long as it can achieve such calcination conditions. Generally, a tubular furnace, a muffle furnace, a rotary kiln (RK), or a roller hearth kiln (RHK) is used. Preferably, RHK or RK is used. By such calcination, a lithium-nickel-cobalt-manganese composite oxide is obtained.
(Water Washing) The calcined product (lithium-nickel-cobalt-manganese composite oxide) is washed with pure water in an amount of 100 ml or more with respect to 100 g of the calcined product to obtain the powdered lithium metal complex oxide of the present invention. The washing is not problematic as long as the amount of water to be used is sufficient to satisfy the range. Typically, pure water at 25°C in an amount of 100 ml or more with respect to 100 g of the calcined product is added to bring the calcined product and water into sufficient contact, and then the powdered lithium metal complex oxide is separated out. A means for bringing the calcined product and water into contact is not limited as long as it is a means to allow the calcined product to be uniformly dispersed in water in a state where the particles of the calcined product are not broken. Generally, a dispersion liquid formed of the calcined product and water is stirred in a container equipped with a stirring blade. Separation of the powdered lithium metal complex oxide is generally performed by filtering a slurry of the powdered lithium metal complex oxide dispersed in water. The filtering means may be arbitrary, and any one of suction filtration, filtration under pressure, and the like can be used. The calcined product separated after water washing is dried. The drying is performed in a temperature band of preferably 200°C to 800°C, more preferably 300°C to 700°C, and still more preferably 400°C to 600°C, in an air stream including oxygen.

[Powdered lithium metal complex oxide]

The powdered lithium metal complex oxide for a lithium ion battery positive electrode active material of the present invention has an average particle diameter (volume-based average diameter) of the particles of more than 10.0 $\mu$m and less than 16.0 $\mu$m, and preferably more than 10 $\mu$m and less than 15.0 $\mu$m, and a specific surface area of the particles by a BET method using nitrogen adsorption of more than 0.5 m$^2$/g and less than 2.0 m$^2$/g, preferably more than 1.0 m$^2$/g and less than 2.0 m$^2$/g, and still more preferably more than 1.0 m$^2$/g and less than 1.5 m$^2$/g. The amount of residual LiOH is reduced to 0.3% by weight or less. In addition, a preferred powdered lithium metal complex oxide for a lithium ion battery positive electrode active material of the present invention has a high packing density, such as a packing density of 3.0 g/cm$^3$ or more as pressurized at 127 MPa. A preferred powdered lithium metal complex oxide for a lithium ion battery positive electrode active material of the present invention has a packing density of 3.2 g/cm$^3$ or more as pressurized at 127 MPa, a packing density of 3.3 g/cm$^3$ or more as pressurized at 191 MPa, a packing density of 3.4 g/cm$^3$ or more as pressurized at 255 MPa, and a packing density of 3.5 g/cm$^3$ or more as pressurized at 318 MPa.

Furthermore, the powdered lithium metal complex oxide for a lithium ion battery positive electrode active material of the present invention can further include 10% by mole or less of one or more dopants selected from Ca, Ti, Al, Mg, W, Zr, Cr, and V. By supplying a metal compound including these dopant atoms as an additional raw material in the mixing step and/or the calcining step, such a dopant can be introduced into the lithium metal composite oxide.

[Lithium Ion Battery Positive Electrode Active Material]

The powdered lithium metal complex oxide of the present invention can be expected as a positive electrode active material which causes a lithium ion battery having an excellent volumetric capacity. The powdered lithium metal complex oxide of the present invention can be singly used as a positive electrode active material of a lithium ion battery. A mixture of the powdered lithium metal complex oxide of the present invention and one or more other positive electrode active materials for a lithium ion battery having different particle diameters or compositions may be used as a positive electrode active material.

Examples

[Example 1]

(Mixing) 653 g of a lithium hydroxide powder was added to 2,500 g of a nickel-cobalt-manganese composite hydroxide (composition: $Ni_{0.8}Co_{0.1}Mn_{0.1}(OH)_2$, average particle diameter of 12.0 μm) powder as a precursor and mixed while applying a shear force, thereby obtaining 3,153 g of a mixture. (Calcination) The mixture was put into a ceramic-made calcination sagger, warmed to 180°C for 30 minutes in an oxygen air stream, and then warmed to 480°C for 4 hours. The mixture was held at the temperature for 12 hours and then cooled to room temperature. Next, the mixture was warmed to 180°C for 3 hours, then warmed to 800°C for 2.5 hours, and then held at the temperature for 6 hours. The mixture was cooled to room temperature and then crushed to obtain a calcined product. (Water Washing) 100 g of the calcined product was taken and mixed with 100 ml of water, and the mixture was stirred at 25°C for 5 minutes and suction-filtered to separate a lithium metal composite oxide. This lithium metal composite oxide was dried at 100°C for 20 hours under reduced pressure to remove moisture, and calcined at 500°C for 20 hours in an oxygen air stream.

In this manner, the powdered lithium metal complex oxide for a lithium ion battery positive electrode active material of the present invention, which has a composition: $Li_{1.02}Ni_{0.8}Co_{0.1}Mn_{0.1}O_2$, was obtained. The properties of the powdered lithium metal complex oxide of the present invention were evaluated by the following methods. The results are shown in Table 1.

(Average Particle Diameter) The average particle diameter ($D_{50}$) of the lithium metal composite oxide particles was measured using a laser scattering particle size distribution measuring device (Mastersizer LS-230).

(Specific Surface Area) The powdered lithium metal complex oxide was placed in a specific surface area measuring device (TriStar, Micromeritics Instrument Corporation) and degassed at 250°C, and then the specific surface area was measured by a BET method using nitrogen adsorption at a liquid nitrogen temperature.

(Amount of Residual Lithium Hydroxide and Lithium Carbonate) 20 g of the powdered lithium metal complex oxide was dispersed in 100 ml of water at 25°C, stirred for 3 minutes with a magnetic stirrer, and then suction-filtered. A portion of the filtrate was taken and the elution amount of the lithium hydroxide and lithium carbonate was measured by a Warder method. The elution amount is expressed as a percent by weight with respect to the powdered lithium metal complex oxide dispersed in water.

(Pellet Density) 0.6 g of the powdered lithium metal complex oxide was placed in a pellet density measuring device (sample diameter of 10 mm, PW10 manufactured by P/O/WEBER Laborpresstechnik), a predetermined pressure was applied thereonto, and the thickness of the pellet was measured. The pellet density was determined by Formula:

```
Pellets Density (g/cm³) = Sample weight (g) ÷ Sample volume

(cm³) after pressurization.
```

[Example 2]

(Mixing) 432 g of a lithium hydroxide powder was added to 1,650 g of a nickel-cobalt-manganese composite hydroxide (composition: $Ni_{0.8}Co_{0.1}Mn_{0.1}(OH)_2$, average particle diameter of 17.0 $\mu$m) powder as a precursor and mixed while applying a shear force, thereby obtaining 3,153 g of a mixture. (Calcination) The mixture was put into a ceramic-made calcination sagger, warmed to 180°C for 30 minutes in an oxygen air stream, and then warmed to 480°C for 4 hours. The mixture was held at the temperature for 12 hours and then cooled to room temperature. Next, after warming to 180°C for 30 minutes, the mixture was warmed to 800°C for 2.5 hours, and then held at the temperature for 6 hours. The mixture was cooled to room temperature to obtain a calcined product of the lithium metal composite oxide. (Water Washing) Water washing was performed in the same manner as in Example 1. In this manner, the powdered lithium metal complex oxide for a lithium ion battery positive electrode active material of the present invention, which has a composition: $Li_{1.02}Ni_{0.8}Co_{0.1}Mn_{0.1}O_2$, was obtained. The properties thereof are shown in Table 1.

[Comparative Example 1]

Under the same conditions as in Example 1 except that a nickel-cobalt-manganese composite hydroxide (composition: $Ni_{0.8}Co_{0.1}Mn_{0.1}(OH)_2$, average particle diameter of 8.5 $\mu$m) powder was used as a precursor, a powdered lithium metal complex oxide having a composition: $Li_{1.02}Ni_{0.8}Co_{0.1}Mn_{0.1}O_2$ was produced. The properties thereof are shown in Table 1.

[Comparative Example 2]

Under the same conditions as in Example 1 except that a nickel-cobalt-manganese composite hydroxide (composition: $Ni_{0.8}Co_{0.1}Mn_{0.1}(OH)_2$, average particle diameter of 3.0 $\mu$m) powder was used as a precursor, a powdered lithium metal complex oxide having a composition: $Li_{1.02}Ni_{0.8}Co_{0.1}Mn_{0.1}O_2$ was produced. The properties thereof are shown in Table 1.

[Comparative Example 3]

Under the same conditions as in Example 1, the raw materials were mixed, calcined, cooled, and crushed to obtain a calcined product of the lithium metal composite oxide. This was used for a comparative powdered lithium metal complex oxide while not performing water washing. This has a composition: $Li_{1.02}Ni_{0.8}Co_{0.1}Mn_{0.1}O_2$. The evaluation results thereof are shown in Table 1.

[Table 1]

| | Production conditions | | | | | Powdered lithium metal complex oxide | | | | | | | | |
|---|---|---|---|---|---|---|---|---|---|---|---|---|---|---|
| | Precursor | | Calcination | | Water washing | Composition | Average particle diameter | Specific surface area | LiOH residue | Li$_2$CO$_3$ residue | Total Li amount | Pellet density (g/cm$^3$) | | |
| | | | | | | | | | A | B | A+B | Pressure at measurement | | |
| | Composition | average particle diameter (μm) | First calci-nation °C (h) | Second calcination °C (h) | | | (μm) | (m$^2$/g) | (% by weight) | (% by weight) | (% by weight) | 127 MPa | 191 MPa | 255 MPa | 318 MPa |
| Example 1 | Ni$_{0.8}$CO$_{0.1}$Mn$_{0.1}$(OH)$_2$ | 12.0 | 480 (4) | 800 (6) | Performed | Li$_{1.02}$Ni$_{0.8}$Co$_{0.1}$Mn$_{0.1}$O$_2$ | 15.4 | 1.07 | 0.20 | 0.11 | 0.31 | 3.24 | 3.39 | 3.50 | 3.59 |
| Example 2 | Ni$_{0.8}$Co$_{0.1}$Mn$_{0.1}$(OH)$_2$ | 17.0 | 480 (4) | 800 (6) | Performed | Li$_{1.02}$Ni$_{0.8}$Co$_{0.1}$Mn$_{0.1}$O$_2$ | 10.9 | 1.16 | 0.23 | 0.12 | 0.35 | 3.32 | 3.46 | 3.57 | 3.65 |
| Compara-tive Example 1 | Ni$_{0.8}$CO$_{0.1}$Mn$_{0.1}$(OH)$_2$ | 8.5 | 480 (4) | 800 (6) | Performed | Li$_{1.02}$Ni$_{0.8}$Co$_{0.1}$Mn$_{0.1}$O$_2$ | 7.9 | 1.18 | 0.21 | 0.11 | 0.32 | 2.92 | 3.11 | 3.24 | 3.33 |
| Compara-tive Example 2 | Ni$_{0.8}$CO$_{0.1}$Mn$_{0.1}$(OH)$_2$ | 3.0 | 480 (4) | 800 (6) | Performed | Li$_{1.02}$Ni$_{0.8}$Co$_{0.1}$Mn$_{0.1}$O$_2$ | 3.1 | 5.89 | 0.41 | 0.30 | 0.71 | 2.51 | 2.69 | 2.82 | 2.92 |
| Compara-tive Example 3 | Ni$_{0.8}$CO$_{0.1}$Mn$_{0.1}$(OH)$_2$ | 12.0 | 480 (4) | 800 (6) | None | Li$_{1.02}$Ni$_{0.8}$Co$_{0.1}$Mn$_{0.1}$O$_2$ | 15.5 | 0.22 | 0.44 | 0.52 | 0.96 | 3.26 | 3.41 | 3.52 | 3.60 |

As shown in Table 1, the powdered lithium metal complex oxide of the present invention has specific values of an average particle diameter and a specific surface area, is capable of being packed at a high density, and has a reduced amount of residual lithium. In a case where such a powdered lithium metal complex oxide of the present invention is used as a positive electrode active material of a lithium ion lithium ion battery, gelling at a time of coating a positive electrode agent is suppressed and a higher output of the battery is expected.

Industrial Applicability

The powdered lithium metal complex oxide of the presen t invention can contribute to production of a high-quality positive electrode agent and a lithium ion battery with a hi gh volumetric capacity using the same.

**Claims**

1.  A powdered lithium metal complex oxide for use as a lithium ion battery positive electrode active material, wherein: the powdered lithium metal complex oxide is constituted by particles of a lithium/nickel/cobalt/manganese complex oxide having the composition $Li_aNi_bCo_cMn_dO_2$ (with $0.8{\leq}a{\leq}1.2$, $0.7{\leq}b{\leq}0.95$, $0.05{\leq}c{\leq}0.33$, $0.05{\leq}d{\leq}0.33$, b+c+d =1), the particles having an average particle size (volumetric average size) of greater than 10.0 $\mu$m and less than 16.0 $\mu$m), the particles having a BET specific surface area as determined via nitrogen adsorption of greater than 0.5 m$^2$/g and less than 2.0 m$^2$/g, and the particles is washed with at least 100 ml of pure water per 100 g of particles to reduce whereby the residual lithium hydroxide content to 0.3% by weight or less.

2.  The powdered lithium metal complex oxide according to claim 1, wherein the particles having a BET specific surface area as determined via nitrogen adsorption of greater than 1.0 m$^2$/g and less than 2.0 m$^2$/g.

3.  The powdered lithium metal complex oxide according to claim 1 or 2, wherein the lithium metal complex oxide further comprises up to 10 mol% of either one or more dopants selected from the group consisting of Ca, Ti, Al, Mg, W, Zr, Cr and V.

4.  The powdered lithium metal complex oxide according to any of claims 1 to 3, having a pressed density of 3.0 g/cm$^3$ or greater under a pressure of 127 MPa.

5.  A positive electrode active material containing the powdered lithium metal complex oxide according to any of claims 1 to 4.

6.  A lithium ion battery containing the positive electrode active material according to claim 5.

7.  A method of producing a powdered lithium metal complex hydroxide according to any of claims 1 to 4, which comprises the following steps; a mixing step, wherein a powder of nickel-cobalt-manganese complex hydroxide having an average particle size of from 10.0 $\mu$m to less than 20.0 $\mu$m is prepared as a precursor powder and powder of a lithium compound is added to the precursor powder, and wherein the amount ratio of the precursor powder to the lithium compound powder is within a range capable of obtaining a mixture at a ratio such that elements Li, Ni, Co, and Mn satisfy a composition of $Li_aNi_bCo_cMn_dO_2$ (with $0.8{\leq}a{\leq}1.2$, $0.7{\leq}b{\leq}0.95$, $0.05{\leq}c{\leq}0.33$, $0.05{\leq}d{\leq}0.33$, b+c+d = 1), a baking step wherein the mixture obtained in the mixing step is baked in a gas flow containing oxygen at the baking temperature within a range of from 450°C to 900°C in the baking time of from 2 hours to 20 hours, and a washing step wherein the baked product (lithium-nickel-cobalt-manganese complex oxide) is washed with pure water in an a mount of 100 mL or greater relative to 100 g of the fired product and wherein lithium metal complex oxide powder is obtained.

## INTERNATIONAL SEARCH REPORT

| International application No. |
| --- |
| PCT/JP2017/026104 |

**A. CLASSIFICATION OF SUBJECT MATTER**
*H01M4/525*(2010.01)i, *C01G53/00*(2006.01)i, *H01M4/505*(2010.01)i

According to International Patent Classification (IPC) or to both national classification and IPC

**B. FIELDS SEARCHED**

Minimum documentation searched (classification system followed by classification symbols)
H01M4/525, C01G53/00, H01M4/505

Documentation searched other than minimum documentation to the extent that such documents are included in the fields searched
Jitsuyo Shinan Koho     1922-1996    Jitsuyo Shinan Toroku Koho   1996-2017
Kokai Jitsuyo Shinan Koho   1971-2017    Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2015/008582 A1 (Sumitomo Metal Mining Co., Ltd.), 22 January 2015 (22.01.2015), claims 1, 4 to 6; paragraphs [0040] to [0042], [0072] to [0089], [0125] to [0132]; table 2 & US 2016/0372748 A1 claims 1, 4 to 6; paragraphs [0094] to [0100], [0148] to [0172], [0258] to [0275]; table 2 & EP 3024068 A1 | 1-7 |
| Y | JP 2010-192424 A (Sumitomo Metal Mining Co., Ltd.), 02 September 2010 (02.09.2010), claims 1 to 5, 11 to 14; paragraphs [0076] to [0078], [0107] to [0113], [0166], [0202] to [0205], [0213]; tables 3, 4 (Family: none) | 1,3-7 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 September 2017 (27.09.17) | 10 October 2017 (10.10.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

9

**INTERNATIONAL SEARCH REPORT**

International application No.

PCT/JP2017/026104

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-15959 A (Sumitomo Metal Mining Co., Ltd.), 21 January 2010 (21.01.2010), paragraphs [0060] to [0073], [0101] to [0109], [0139] to [0144]; table 1 (Family: none) | 1,3-7 |
| Y | JP 2001-243952 A (Toyota Central Research and Development Laboratories, Inc.), 07 September 2001 (07.09.2001), paragraph [0047]; table 1 (Family: none) | 1-7 |
| Y | JP 2007-53116 A (GS Yuasa Corp.), 01 March 2007 (01.03.2007), paragraph [0018] (Family: none) | 1-7 |
| Y | JP 2014-225430 A (Samsung SDI Co., Ltd.), 04 December 2014 (04.12.2014), paragraphs [0041], [0080], [0088]; table 9 & US 2014/0342246 A1 paragraphs [0049], [0084], [0096]; table 9 & EP 2804242 A1 & CN 104157901 A | 1-7 |
| Y | WO 2015/189740 A1 (UMICORE), 17 December 2015 (17.12.2015), claims 1, 9 & US 2017/0125808 A1 | 3 |
| A | JP 2007-91573 A (Tosoh Corp.), 12 April 2007 (12.04.2007), entire text (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4268392 B